# EUROPEAN PATENT APPLICATION

(11) **EP 2 873 860 A1**
(43) Date of publication of application: **20.05.2015**
(21) Application number: 14190548.9
(22) Date of filing: 27.10.2014
(51) Int. Cl.: F04B 53/14, F04B 53/16, F04B 47/02, F04B 47/12

(54) **Plunger pump and method of manufacturing a plunger pump**

(30) Priority: 11.11.2013 US 201314076437
(71) Applicant: National Oilwell Varco, L.P., Houston, TX 77036 (US)
(72) Inventor: Whaley, Jason Neal, Bells, TX Texas 75414 (US); Moeller, Manuel, Tulsa, OK Oklahoma 74129 (US); Folk, Heath Gregory, Houston, TX Texas 77096 (US)
(74) Representative: Beck Greener

(57) **Abstract**

A plunger pump includes a pump fluid end having a fluid chamber and a suction bore, discharge bore, and plunger bore in communication with the fluid chamber. A plunger is arranged to reciprocate into and out of the fluid chamber through the plunger bore. The plunger has a plunger body with an inner cavity and an insert disposed in the inner cavity such that the combined stiffness of the insert and plunger body is greater than the stiffness of the plunger body. A crank mechanism is coupled to the plunger and operable to reciprocate the plunger.

## Description

The present invention relates to a plunger pump and a method of manufacturing a plunger pump. In embodiments, the invention relates to construction of high pressure plunger pumps.

Well service pumps are used in the oil and gas industry to pump fluids down a well for various purposes. One common use of well service pumps is in hydraulic fracturing of formations. The pump can be used to pump a high pressure fluid containing solids into the well, where the high pressure fluid will expand fractures in the formation or fracture the formation, leaving larger fluid passages through which formation fluids can flow into the well. The solids in the fluid will remain in the larger fluid passages to prop the fluid passages open, thereby increasing well production.

Well service pumps are commonly plunger pumps, which are a type of reciprocating positive displacement pumps. In these pumps, a plunger reciprocates axially in a fluid end, with a packing retained between the fluid end and plunger preventing leakage during the reciprocating motion of the plunger. A small annular gap is typically provided between the outer diameter of the plunger and the inner diameter of the packing to prevent galling or surface damage to the plunger as the plunger reciprocates. However, slight increases in gap clearance may have a detrimental effect on the life of the packing due primarily to accelerated packing material extrusion.

High plunger compressive strength is typically needed to help maximize packing life and the operational efficiencies of the pump. Many conventional high pressure well service plunger pumps use plungers of solid construction to achieve high plunger compressive strength. However, larger diameter and/or longer stroke plungers with solid construction are often unwieldy to handle during routine maintenance operations. Hollow plungers have been proposed, but these hollow plungers tend to deflect diametrically under loads.

Plunger pumps use a crank mechanism to provide the reciprocating motion of the plunger. The crank mechanism typically includes an extension rod that is rigidly attached to a crosshead that is constrained to move axially by the frame of the pump. The crosshead is coupled to an eccentric crankshaft via a wrist pin and connecting rod. As the crankshaft rotates, the connecting rod transfers this motion to the crosshead. Because the crosshead is constrained to move axially, the rotational motion will be converted into reciprocating motion, which is transferred to the plunger via the extension rod.

The wrist pin is retained to the crosshead and is supported using a bearing located internally within the connecting rod. An annular gap is typically provided between the outer diameter of the wrist pin and the inner diameter of the wrist pin bearing to allow distribution of a lubrication film and to prevent load transfer from the relatively large rod to the much smaller wrist pin. This annular gap allows deformation of the connecting rod bearing surface during high load conditions, which can create uneven loading and premature bearing failure, such as galling.

Many conventional fluid ends feature a valve over valve arrangement, where the suction and discharge valves are positioned vertically, one valve above the other, and perpendicular to the intersecting plunger bore. This provides a rather compact fluid end design, which is desirable for mobile applications. However, the intersection of these two bores creates a surface discontinuity, significantly increasing stresses within these highly localized areas. These surfaces normally fail due to fatigue as they are also exposed to cyclical loadings.

According to a first aspect of the present invention, there is provided a plunger pump, comprising: a pump fluid end having a fluid chamber, a suction bore in communication with the fluid chamber, a discharge bore in communication with the fluid chamber, and a plunger bore in communication with the fluid chamber; a plunger arranged to reciprocate into and out of the fluid chamber through the plunger bore, the plunger having a plunger body with an inner cavity and an insert disposed in the inner cavity, wherein a combined stiffness of the plunger body and insert is greater than a stiffness of the plunger body; and a crank mechanism coupled to the plunger and operable to reciprocate the plunger.

Preferably, the inner cavity occupies 30% to 60% of the volume of the plunger body.

Preferably, the insert is configured such that there is an interference fit between an outer surface of the insert and an inner surface of the plunger body.

Preferably, the insert is a hollow insert.

Preferably, the insert is a solid insert.

Preferably, a volume of the insert is 30% to 70% of a volume of the inner cavity.

Preferably, the crank mechanism comprises a crosshead coupled to the plunger, a connecting rod coupled to the crosshead, and a crankshaft coupled to the connecting rod.

Preferably, a coupling between the crosshead and connecting rod comprises a wrist pin coupled to the crosshead and retained to the connecting rod such that there is no relative rotation between the wrist pin and the connecting rod.

Preferably, the wrist pin is retained to the connecting rod by inserting a retainer fastener through the connecting rod into a hole inside the wrist pin.

Preferably, a coupling between the crosshead and connecting rod comprises a pair of surface holes in the connecting rod and a pair of wrist pins engaging the surface holes and retained to the crosshead.

Preferably, the crank mechanism further comprises an extension rod coupling the plunger to the crosshead.

Preferably, the crank mechanism further comprises an adapter plate coupling the plunger to the crosshead.

Preferably, the wrist pin is received in a hole in the connecting rod, and wherein the hole and wrist pin are configured such that there is an interference fit between the wrist pin and the connecting rod.

Preferably, the suction bore intersects the plunger bore, and wherein a transition between the suction bore and plunger bore comprises a fillet surface.

Preferably, the discharge bore intersects the plunger bore, and wherein a transition between the discharge bore and plunger bore comprises a combination of a fillet surface, a reduced diameter bore, a tapered surface, and an enlarged diameter bore.

Preferably, a tapered valve seat is formed in each of the suction bore and discharge bore.

According to a second aspect of the present invention, there is provided a plunger for a plunger pump, comprising: a plunger body having an inner cavity defined therein and an open end; and an insert disposed in the inner cavity, the insert being configured such that a combined stiffness of the insert and plunger body is greater than a stiffness of the plunger body; and an end cap mounted at the open end and adapted for coupling to an adapter plate or extension rod of a crank mechanism.

Preferably, the inner cavity occupies 30% to 60% of the volume of the plunger body.

Preferably, the insert is configured such that there is an interference fit between an outer surface of the insert and an inner surface of the plunger body.

Preferably, the insert is a hollow insert.

Preferably, the insert is a solid insert.

Preferably, a volume of the insert is 30% to 70% of a volume of the inner cavity.

According to a third aspect of the present invention, there is provided a method of manufacturing a plunger pump, comprising: forming a pump fluid end having a fluid chamber, a suction bore and a discharge bore disposed along a first axis and intersecting with the fluid chamber, and a plunger bore disposed along a second axis that is perpendicular to the first axis and intersecting with the fluid chamber; forming a plunger having a plunger body with an inner cavity; disposing an insert in the inner cavity such that a combined stiffness of the plunger body and insert is greater than a stiffness of the plunger body; arranging the plunger in the plunger bore; and coupling a crank mechanism to the plunger to reciprocate the plunger into and out of the fluid chamber through the plunger bore.

Preferably, coupling the crank mechanism comprises coupling a crosshead of the crank mechanism to the plunger and coupling a connecting rod of the crank mechanism to the crosshead, wherein coupling the connecting rod comprises retaining a wrist pin coupled to the crosshead to the connecting rod such that there is no relative motion between the wrist pin and the connecting rod.

Preferably, forming the pump fluid end comprises forming a first transition between the suction bore and plunger bore comprising a first fillet surface and forming a second transition between the discharge bore and plunger bore comprising a second fillet surface.

The subject matter disclosed herein relates to improvements in a plunger pump. In one illustrative embodiment, a plunger pump comprises a pump fluid end having a fluid chamber and a suction bore, discharge bore, and plunger bore in communication with the fluid chamber. A plunger is arranged to reciprocate into and out of the fluid chamber through the plunger bore. The plunger has a plunger body with an inner cavity and an insert disposed in the inner cavity to increase the stiffness of the plunger. A crank mechanism is coupled to the plunger and operable to reciprocate the plunger.

It is to be understood that both the foregoing general description and the following detailed description are exemplary of certain embodiments of the invention and are intended to provide an overview or framework for understanding the disclosure . The accompanying drawings illustrate various exemplary embodiments of the invention and are included to provide a further understanding of the disclosure and the principles and operation of the disclosed embodiments.

The following is a description of the figures in the accompanying drawings. The figures are not necessarily to scale, and certain features and certain views of the figures may be shown exaggerated in scale or in schematic in the interest of clarity and conciseness.
FIG. 1A shows a cross-section of an illustrative embodiment of a plunger pump.
FIG. 1B shows a cross-section of another illustrative embodiment of a plunger pump.
FIG. 2 shows an enlarged portion of the cross-section of FIG. 1A.
FIG. 3 shows a cross-section of an illustrative embodiment of a plunger.
FIG. 4A shows an illustrative embodiment of a connecting rod and crosshead assembly.
FIG. 4B shows a cross-section of FIG. 4A along line 4B-4B.
FIG. 4C shows a cross-section of FIG. 4A along line 4C-4C.
FIG. 5 shows a cross-section of an illustrative embodiment of a crosshead and connecting rod assembly.
FIG. 6 shows a cross-section of an illustrative embodiment of a crosshead and connecting rod assembly.
FIG. 7 shows a cut-away of the pump fluid end of FIG. 1A.

In the following detailed description, numerous specific details may be set forth in order to provide a thorough understanding of the disclosed embodiments. However, it is to be understood that other embodiments of the invention may be practiced without incorporating some or all of the specific details that are a part of these disclosed embodiments. In other instances, well-known features or processes may not be described in detail in the disclosed embodiments so as not to unnecessarily obscure the disclosure. In addition, like or identical reference numerals may be used to identify common or similar elements between the embodiments.

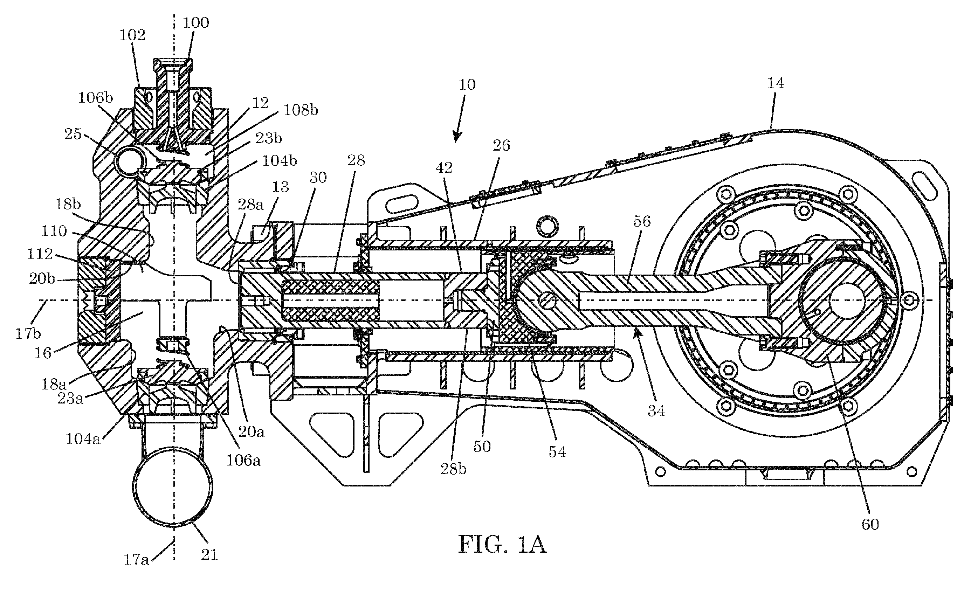

FIG. 1A is an illustrative embodiment of a plunger pump 10 having a pump fluid end 12 coupled to a pump power end 14 via stay rods 13. The pump fluid end 12 includes a fluid chamber 16. The pump fluid end 12 further includes a suction bore 18a, a discharge bore 18b, a plunger bore 20a, and an access bore 20b, all of which intersect with the fluid chamber 16. The suction and discharge bores 18a, 18b are opposed and generally axially aligned along axis 17a, and the plunger bore 20a and access bore 20b are opposed and generally axially aligned along axis 17b. Axis 17b is perpendicular to axis 17a. The suction bore 18a is in communication with a suction manifold 21 via a suction valve 23a. Similarly, the discharge bore 18b is in communication with a discharge port 25 via a discharge valve 23b.

A plunger 28 is arranged in the plunger bore 20a and may reciprocate into and out of the fluid chamber 16. The reciprocating motion is provided by a crank mechanism 34 that is located in the pump power end 14. During the suction stroke of the plunger 28, the plunger 28 is withdrawn from the fluid chamber 16 into the plunger bore 20a, and fluid is drawn from the suction manifold 21, through the suction valve 23a, into the fluid chamber 16. During the discharge stroke of the plunger 28, the plunger 28 is extended from the plunger bore 20a into the fluid chamber 16, whereby the plunger 28 forces the fluid in the fluid chamber 16 through the discharge valve 23b and into the discharge port 25.

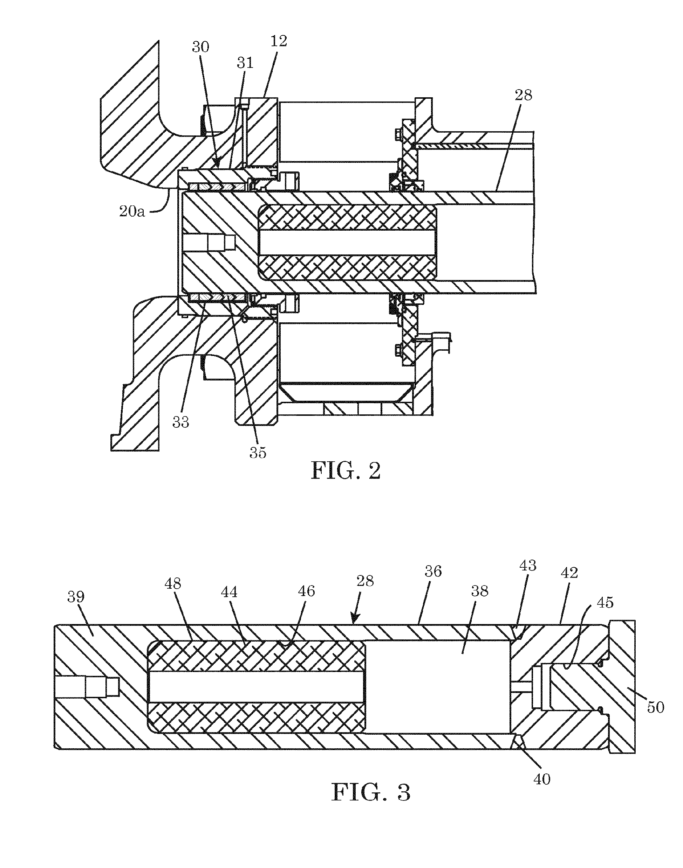

The plunger 28 slides through a packing arrangement 30 mounted at an end of the plunger bore 20a. In one illustrative embodiment, as shown in FIG. 2, the packing arrangement 30 includes a packing housing 31 that is attached to the pump fluid end 12, near the end of the plunger bore 20a, by removable attachment means such as a threaded connection and the like. The packing housing 31 carries a packing assembly 33, which comprises a set of seals 35. The packing assembly 33 circumscribes the outer diameter of the plunger 28. The arrangement of the packing assembly 33 is such that there will be a small clearance between the opposing surfaces of the packing assembly 33 and the plunger 28 so as to avoid damage to the surface of the plunger 28 as the plunger 28 slides through the packing assembly 33. By removably attaching the packing housing 31 to the pump fluid end 12, replacement of the packing assembly 33 will be relatively easy during maintenance of the plunger pump 10.

In one illustrative embodiment, as shown in FIG. 3, the plunger 28 has a plunger body 36 with an inner cavity 38, a closed end 39, and open end 40. The plunger body 36 may have a cylindrical shape, for example. An end cap 42 covers the open end 40 of the plunger body 36. The end cap 42 has an opening 45 that is configured to receive one end of an adapter plate (50 in FIG. 1A) of the crank mechanism (34 in FIG. 1A). In an alternate embodiment, the end cap 42 may be adapted for connection to an extension rod instead of an adapter plate. The joint 43 between the end cap 42 and plunger body 36 may be fluid tight. Such fluid tightness may be achieved by welding, seals, and the like. In one embodiment, the plunger body 36 and end cap 42 are made of weldable materials and are joined together by welding. After the welding, a hardened coating is applied to the surface of the plunger 28 to protect the plunger 28 from the environment and improve wear characteristics. The coating may be surface ground to a desired finish.

The inner cavity 38 occupies a substantial volume of the plunger body 36. For example, the inner cavity 38 may occupy 30% to 60% of the volume of the plunger body 36. The plunger 28 with the inner cavity 38 will have a substantially reduced weight compared to a solid plunger made of the same material and size.

In one embodiment, an insert 44 is disposed inside the inner cavity 38 to increase the stiffness of the plunger 28 and prevent diametric deflection of the plunger 28 under load. That is, the combined stiffness of the insert 44 and plunger body 36 is greater than the stiffness of the plunger body 36 alone. In one embodiment, one of the properties of the insert 44 is that the shape and size of the insert 44 are such that there is an interference fit between the inner surface 46 of the plunger body 36 and the outer surface 48 of the insert 44. The interference fit between the surfaces 46, 48 will place the plunger body 36 in tension during the relaxed state of the plunger pump, such as during the suction stroke of the pump. This tension will act as a pre-tension that will help to partially counteract hydraulic forces encountered during the discharge stroke of the pump. Another property of the insert 44 may be that the stiffness of the insert 44 is comparable to, e.g., approximately equal to, or higher than the stiffness of the plunger body 36. Stiffness is a measure of rigidity of a body and is a function of material properties and geometry.

In one embodiment, the shape of the insert 44 is the same as the shape of the inner cavity 38. For example, both the insert 44 and inner cavity 38 could be cylindrical in shape. In one embodiment, the volume of the insert 44 is substantially less than the volume of the inner cavity 38. For example, the volume of the insert 44 may be 30% to 70% of the volume of the inner cavity 38. The length of the insert 44 may be the same as or may be shorter than the length of the inner cavity 38. The insert 44 may be hollow as shown or may be solid. In general, a hollow insert will add less weight to the plunger 28 compared to a solid insert of the same material and length. For overall weight management of the plunger 28, the insert 44 along with the plunger body 36 and end cap 42 may be made of lightweight material such as aluminum. However, it is possible to use alternate materials for construction of these parts, from low cost steel to extremely lightweight composites. Also, it is not necessary that the material of the insert 44 is the same as that of the plunger body 36 and end cap 42.

Returning to FIG. 1A, the crank mechanism 34 includes, generally in order, an adapter plate 50, a crosshead 54, a connecting rod 56, and a crankshaft 60. One end of the adapter plate 50 is inserted into an opening in the end cap 42 of the plunger 28 (also, see FIG. 3). The adapter plate 50 may be secured to the end cap 42 using any suitable means, such as a welded or threaded connection. The other end of the adapter plate 50 is rigidly attached to one end of the crosshead 54. Therefore, the adapter plate 50 couples the plunger 28 to the crosshead 54. In an alternate embodiment, the adapter plate 50 could be replaced by an extension rod, where the extension rod would couple the plunger 28 to the crosshead 54.

The crosshead 54 is arranged inside a cylinder 26 supported inside the pump power end 14. The axial axis of the cylinder 26 is generally aligned with that of the plunger bore 20a. The connecting rod 56 is coupled at one end to the crosshead 54 and at the other end to the crankshaft 60. As the crankshaft 60 rotates, the connecting rod 56 will transfer this rotational motion to the crosshead 54. Because the crosshead 54 is constrained to move linearly by the cylinder 26, the rotational motion will be converted into reciprocating motion, which will be transferred to the plunger 28 via the adapter plate 50.

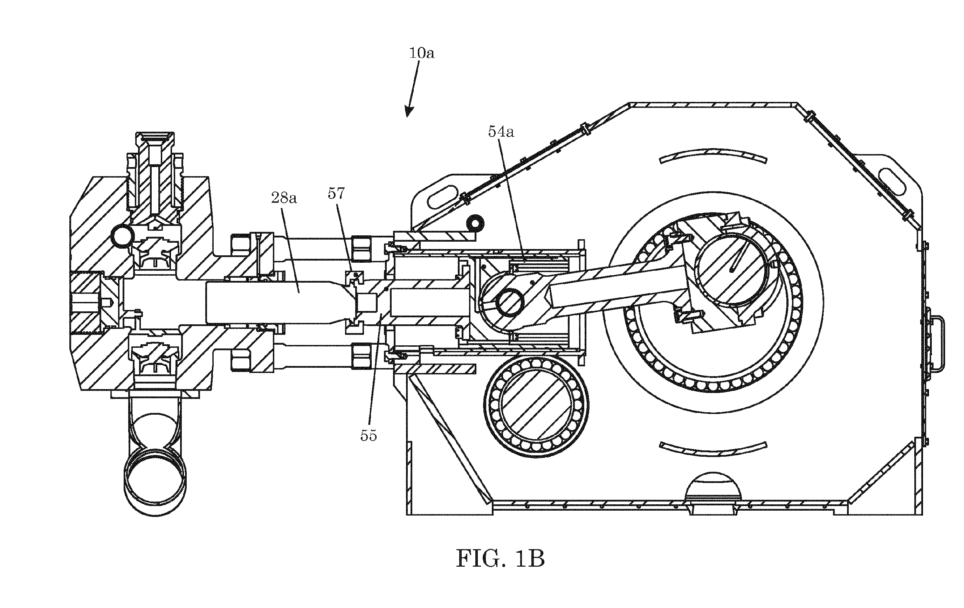

As mentioned earlier, an extension rod may be used in lieu of an adapter plate to couple the plunger to the crosshead. FIG. 1B shows a pump 10a including an extension rod 55 extending between a plunger 28a and a crosshead 54a. One end of the extension rod 55 is secured to the plunger 28a by a clamp 57. Other attachment methods besides a clamp may be used between the extension rod 5 and plunger 28a, such as a threaded connection. The other end of the extension rod 55 may include a flange that is secured to the crosshead 54a by means of bolts. It is also possible to attach the extension rod 55 to the crosshead 54a by other methods besides a bolted flange. The plunger 28a is similar in structure to the plunger 28 of FIG. 1A, and the crosshead 54a is similar in structure to the crosshead 54 of FIG. 1A. The other parts of pump 10a not described are similar to the corresponding pump parts in FIG. 1A. Extension rods are more common in mobile short stroke pump applications to help isolate the power end from potential contamination from either the fluid end or ambient environment and to help ease routine maintenance.

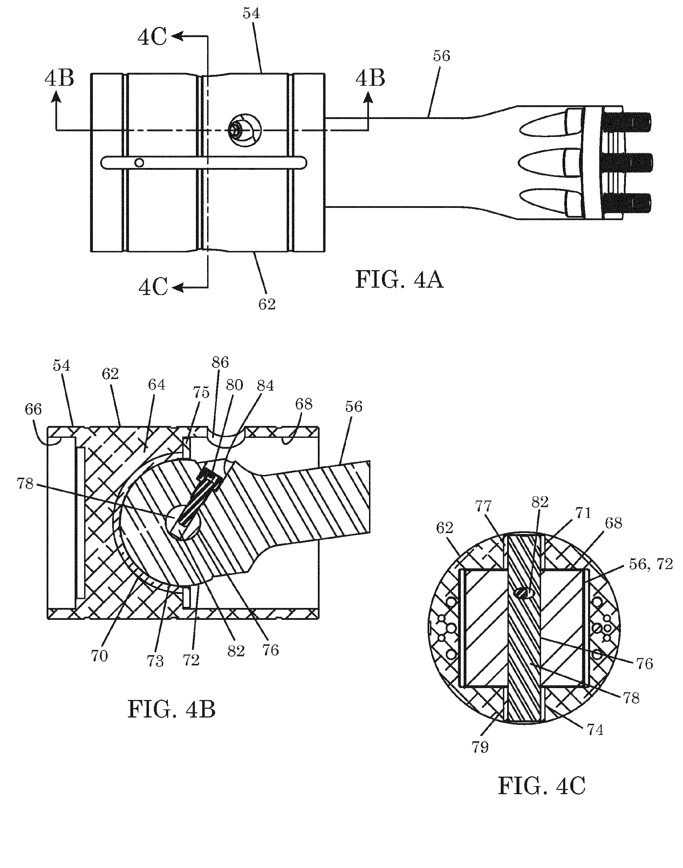

FIG. 4A shows a connecting rod and crosshead assembly including the crosshead 54 and the connecting rod 56. The crosshead 54 has a crosshead body 62, which may be generally cylindrical in shape. In the cross-section shown in FIG. 4B, there is a divider wall 64 inside the crosshead body 62, with openings 66, 68 on either side of the divider wall 64. The opening 66 is for receiving one end of the adapter plate (50 in FIG. 1A) or extension rod (55 in FIG. 1B). The end of the adapter plate (or extension rod) received through the opening 66 will be rigidly attached to the side of the divider wall 64 facing the opening 66. The opening 68 is for receiving one end of the connecting rod 56. The divider wall 64 includes a surface 70 shaped to mate with a head 72 of the connecting rod 56. (The entire length of the connecting rod 56 is not shown in FIG. 4B.) A bearing 73 is mounted to the surface 70 to support pivoting or rotation of the head 72 relative to the surface 70. The bearing 73 will be between the surface 70 and the head 72 when the connecting rod 56 is coupled to the crosshead 54. The bearing 73 may be retained to the divider wall 64 by means of a retainer plate 75 or other suitable means.

In FIG. 4C, holes 71, 74 are formed in the wall of the crosshead body 62. The holes 71, 74 are axially aligned and both intersect with the opening 68 of the crosshead body 62. A hole 76 runs through the connecting rod head 72. To couple the connecting rod 56 to the crosshead 54, the connecting rod head 72 is inserted into the crosshead body opening 68 such that hole 76 in the head 72 is axially aligned with the holes 71, 74 in the wall of the crosshead body 62. Then, a wrist pin (or retainer pin) 78 is inserted into the aligned holes 71, 74, 76. In one embodiment, the wrist pin 78 is retained to the connecting rod 56 such that the wrist pin 78 does not rotate relative to the connecting rod 56 but rotates in unison with the connecting rod 56. In one embodiment, the sizing of the wrist pin 78 and connecting rod head hole 76 is such that there is an interference fit between the connecting rod 56 (or the connecting rod head 72) and the wrist pin 78, thereby increasing the compressive stiffness of the assembly. The wrist pin 78 also can rotate within the holes 71, 74 and relative to the crosshead body 62. Bushings 77, 79 may be arranged in the holes 71, 74 to support rotation of the wrist pin 78 within the holes 71, 74.

Retaining the wrist pin 78 to the connecting rod 56 as described above eliminates the need to provide a wrist pin bearing internally within the connecting rod, i.e., within the hole 76, to support rotation of the wrist pin 78. If a wrist pin bearing had to be provided in the hole 76, it would be necessary to maintain an annular space between the wrist pin and the wrist pin bearing for lubrication film and to prevent load transfer from the relatively large connecting rod end to the much smaller wrist pin, especially during the pump's discharge stroke. However, the annular space will allow deformation of the connecting rod bearing surface during high load conditions, creating uneven loading and premature bearing failure, such as galling. The need for a wrist pin bearing, and annular space between the wrist pin and wrist pin bearing, is eliminated by retaining the wrist pin 78 to the connecting rod 56 such that the wrist pin 78 and connecting rod 56 essentially form a single body.

The wrist pin 78 may be retained to the connecting rod 56 by a suitable retainer fastener. In the embodiment of FIG. 4B, the connecting rod head 72 has a side hole 84 that intersects with the hole 76 in the connecting rod head 72. Also, the wrist pin 78 has a hole 82 that can be aligned with the side hole 84. A retainer fastener 80 is inserted through the side hole 84 in the connector rod head 72 into the hole 82 in the wrist pin 78. In one embodiment, the retainer fastener 80 is in the form of a bolt with a threaded shank. The retainer fastener 80 is threaded through the side hole 84 until its tip is received in the hole 82 of the wrist pin 78. With the retainer fastener 80 extending into the hole 82, the wrist pin 78 will be prevented from rotating within the hole 76 in the connecting rod head 72. The retainer fastener 80 is retained to connecting rod head 72, e.g., by means of a threaded connection or other means, thereby ensuring that the retainer fastener 80 will not pop out of the hole 82 in the wrist pin 78. With this arrangement, the wrist pin 78 will rotate in unison with the connecting rod 56. The crosshead body 62 may have an access port 86 to allow access to the side hole 84 after the connecting rod head 72 has been inserted into the crosshead body opening 68.

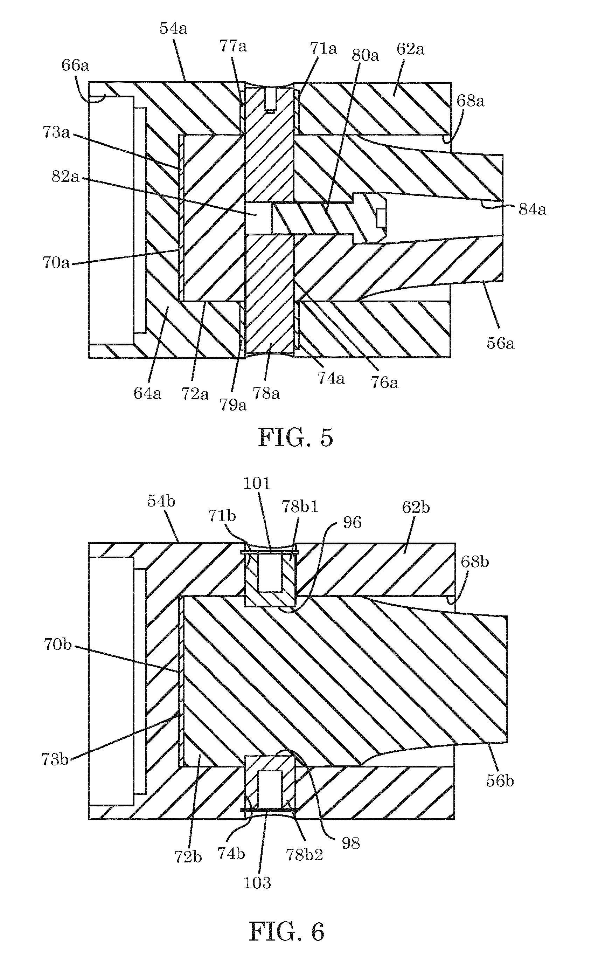

FIG. 5 shows another illustrative embodiment of a connecting rod and crosshead assembly including a crosshead 54a and a connecting rod 56a. (The entire length of the connecting rod 56a is not shown in FIG. 5.) In the embodiment of FIG. 5, the crosshead 54a has a crosshead body 62a with a divider wall 64a inside the crosshead body 62a and openings 66a, 68a on either side of the divider wall 64a. Axially aligned holes 71a, 74a run through the wall of the crosshead body 62a. The head 72a of the connecting rod 56a has a hole 76a that is axially aligned with the holes 71a, 74a when the head 72a is inserted in the opening 68a. A wrist pin (or retainer pin) 78a is inserted through the aligned holes 71a, 74a, 76a, thereby coupling the connector rod 56a to the crosshead 54a. In one embodiment, the wrist pin 78a is retained to the connecting rod head 72a by means of a retainer fastener 80a. The retainer fastener 80a is inserted through an interior hole 84a running down the length of the connecting rod 56a into an aligned hole 82a in the wrist pin 78a. With the retainer fastener 80a extending into the hole 82a in the wrist pin 78a, the wrist pin 78a will be prevented from rotating within the hole 76a in the connecting rod head 72a. The retainer fastener 80a is retained to the head 72a, e.g., by means of a threaded connection or other means, thereby ensuring that the retainer fastener 80a will not pop out of the wrist pin hole 82a. With this arrangement, the wrist pin 78a will rotate in unison with the connecting rod 56a. A bearing 73a may be provided between the connecting rod head 72a and the surface 70a of the divider wall 64a to support rotation of the connecting rod 56 relative to the crosshead 54a. Similarly, bushings 77a, 79a may be provided between the wrist pin 78a and the crosshead body 62a to support rotation of the wrist pin 78a within the holes 71a, 74a.

FIG. 6 shows another illustrative embodiment of a connecting rod and crosshead assembly including a crosshead 54b and a connecting rod 56b. (The entire length of the connecting rod 56a is not shown in FIG. 6.) The crosshead 54b is similar to the crosshead 54a described with reference to FIG. 5. In the embodiment of FIG. 6, surface holes 96, 98 are formed in the sides of the head 72b of the connecting rod 56b. To couple the connecting rod 56b to the crosshead 54b, the connecting rod head 72b is inserted into the opening 68b of the crosshead body 62b such that the surface holes 96, 98 are aligned with the holes 71b, 74b in the wall of the crosshead body 62b. Wrist pins (or retainer pins) 78b1, 78b2 are inserted into the aligned holes 71b, 96 and 74b, 98, respectively. The wrist pins 78b1, 78b2 are retained to the crosshead body 62b by retainer rings 101, 103. In this embodiment, the wrist pins 78b1, 78b2 will be stationary relative to the crosshead body 62b and will not rotate in unison with the connecting rod 56b. The connecting rod 56b will rotate relative to the wrist pins 78b1, 78b2 and the surface 70b of the crosshead body 62b. A bearing 73b can be mounted in between the surface 70b and the connecting rod head 72b to support rotation of the connecting rod 56b.

In all the embodiments described above, lubrication ports may be provided as necessary to allow lubricant to be applied to the bearing and bushing surfaces.

Returning to FIG. 1A, an end cover 100 is mounted at an end of the discharge bore 18b. The end cover 100 is held in place by a retainer 102 that is secured to the pump fluid end 12 by means of, for example, a threaded connection. The discharge valve 23b is mounted below the end cover 100 and is biased against a discharge valve seat 104b by means of a spring 106b. The discharge valve 23b is lifted off the discharge valve seat 104b when the force of the fluid from the fluid chamber 16 overcomes the force of the spring 106b. When the discharge valve 23b is lifted off the discharge valve seat 104b, fluid will flow into a space 108b in between the discharge valve 23b and the end cover 100 and then exit through the discharge port 25.

A valve cage retainer 110 is arranged in the fluid chamber 16 and attached to the pump fluid end 12. The suction valve 23a is mounted below the valve cage retainer 110 and is biased against a suction valve seat 104a by means of a spring 106a. The suction valve 23a is lifted off the suction valve seat 104a when the force of the fluid from the suction manifold 21 overcomes the force of the spring 106a. When the suction valve 23a is lifted off the suction valve seat 104a, fluid will flow into the fluid chamber 16. The arrangement of the valve cage retainer 110 is such that the valve cage retainer 110 does not prevent the plunger 28 from extending into the fluid chamber 16. A removable end cover 112 may be mounted in the access bore 20b opposite to the plunger 28.

In FIG. 1A, the suction bore 18a intersects with the access bore 20b and the plunger bore 20a. Also, the discharge bore 18b intersects with the access bore 20b and the plunger bore 20a. The fluid chamber 16 is defined at the intersection of all these bores. Abrupt transitions at these intersections are avoided through the use of tapered bores and fillet surfaces. This has the effect of reducing localized stress concentrations inside the pump fluid end 12.

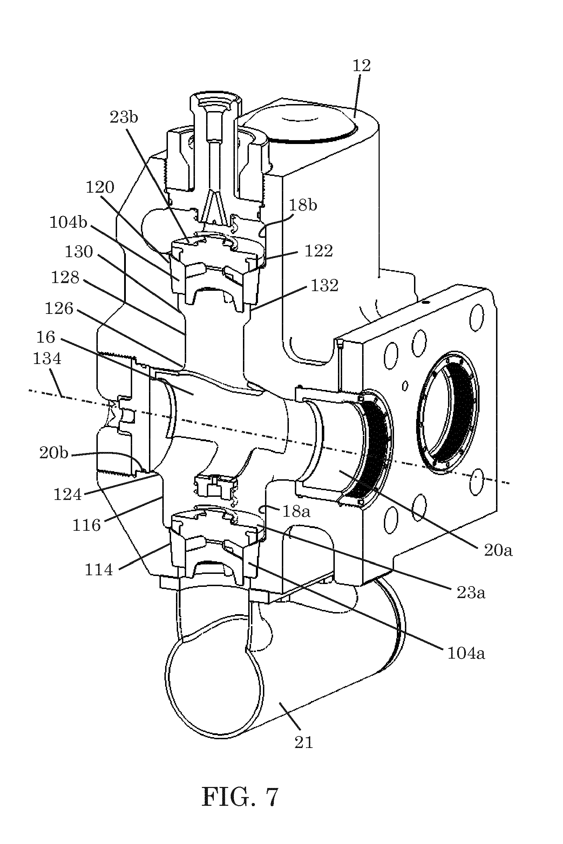

FIG. 7 shows a fluid passage geometry of the pump fluid end 12 according to one illustrative embodiment. The suction bore 18a includes a tapered suction valve seat bore 114 and a straight suction valve bore 116. The straight suction valve bore 116 is connected to the plunger bore 20a and the access bore 20b by a fillet surface 124. The discharge bore 18b includes a tapered discharge valve seat bore 120 and a straight discharge valve bore 122. The discharge bore 18b is connected to the plunger bore 20a and access bore 20b via a combination of a fillet surface 126, a reduced diameter bore 128, a tapered bore 130, and an enlarged diameter bore 132. The bores 128, 132 are straight bores in one embodiment. In alternate embodiments, they could be tapered bores.

The fillet surfaces 124, 126 remove the material that typically exhibits high stress levels in the pump fluid end, greatly improving the overall strength of the pump fluid end. The reduced diameter bore 128 also helps improve the structure integrity of the discharge bore 18b. In addition, the tapered discharge valve seat bore 120 is translated away from the plunger axis 134. This allows a smoother transition between the fluid chamber 16 and the discharge valve seat bore 120.

While exemplary embodiments of the invention have been described herein, those skilled in the art, having benefit of this disclosure, will appreciate that other embodiments can be devised which do not depart from the scope of the invention as claimed herein. Accordingly, the scope of the invention should be limited only by the attached claims. Indeed, embodiments of the present invention have been described with particular reference to the examples illustrated. However, it will be appreciated that variations and modifications may be made to the examples described within the scope of the present invention.

## Claims

1. A plunger pump, comprising:
a pump fluid end having a fluid chamber, a suction bore in communication with the fluid chamber, a discharge bore in communication with the fluid chamber, and a plunger bore in communication with the fluid chamber;
a plunger arranged to reciprocate into and out of the fluid chamber through the plunger bore, the plunger having a plunger body with an inner cavity and an insert disposed in the inner cavity, wherein a combined stiffness of the plunger body and insert is greater than a stiffness of the plunger body; and
a crank mechanism coupled to the plunger and operable to reciprocate the plunger.

2. The plunger pump of claim 1, wherein the inner cavity occupies 30% to 60% of the volume of the plunger body.

3. The plunger pump of claim 1 or 2, wherein the insert is configured such that there is an interference fit between an outer surface of the insert and an inner surface of the plunger body.

4. The plunger pump of any of claims 1 to 3, wherein the insert is a hollow insert.

5. The plunger pump of any of claims 1 to 4, wherein a volume of the insert is 30% to 70% of a volume of the inner cavity.

6. The plunger pump of any of claims 1 to 5, wherein the crank mechanism comprises a crosshead coupled to the plunger, a connecting rod coupled to the crosshead, and a crankshaft coupled to the connecting rod.

7. The plunger pump of claim 6, wherein a coupling between the crosshead and connecting rod comprises a wrist pin coupled to the crosshead and retained to the connecting rod such that there is no relative rotation between the wrist pin and the connecting rod.

8. The plunger pump of claim 7, wherein the wrist pin is retained to the connecting rod by inserting a retainer fastener through the connecting rod into a hole inside the wrist pin.

9. The plunger pump of claim 7, wherein a coupling between the crosshead and connecting rod comprises a pair of surface holes in the connecting rod and a pair of wrist pins engaging the surface holes and retained to the crosshead.

10. The plunger pump of claim 7, wherein the plunger and the crosshead of the crank mechanism are coupled to one another with one of an extension rod and an adapter plate.

11. The plunger pump of claim 7, wherein the wrist pin is received in a hole in the connecting rod, and wherein the hole and wrist pin are configured such that there is an interference fit between the wrist pin and the connecting rod.

12. The plunger pump of any of claims 1 to 11, wherein the suction bore intersects the plunger bore, and wherein a transition between the suction bore and plunger bore comprises a fillet surface;
wherein the discharge bore intersects the plunger bore, and wherein a transition between the discharge bore and plunger bore comprises a combination of a fillet surface, a reduced diameter bore, a tapered surface, and an enlarged diameter bore; and
wherein a tapered valve seat is formed in each of the suction bore and discharge bore.

13. A method of manufacturing a plunger pump, comprising:
forming a pump fluid end having a fluid chamber, a suction bore and a discharge bore disposed along a first axis and intersecting with the fluid chamber, and a plunger bore disposed along a second axis that is perpendicular to the first axis and intersecting with the fluid chamber;
forming a plunger having a plunger body with an inner cavity;
disposing an insert in the inner cavity such that a combined stiffness of the plunger body and insert is greater than a stiffness of the plunger body;
arranging the plunger in the plunger bore; and
coupling a crank mechanism to the plunger to reciprocate the plunger into and out of the fluid chamber through the plunger bore.

14. The method of claim 13, wherein coupling the crank mechanism comprises coupling a crosshead of the crank mechanism to the plunger and coupling a connecting rod of the crank mechanism to the crosshead, wherein coupling the connecting rod comprises retaining a wrist pin coupled to the crosshead to the connecting rod such that there is no relative motion between the wrist pin and the connecting rod.

15. The method of claim 13 or 14, wherein forming the pump fluid end comprises forming a first transition between the suction bore and plunger bore comprising a first fillet surface and forming a second transition between the discharge bore and plunger bore comprising a second fillet surface.
